# EUROPÄISCHE PATENTSCHRIFT

(11) **EP 1 537 003 B1**
(45) Veröffentlichungstag und Bekanntmachung des Hinweises auf die Patenterteilung: **14.02.2007**
(21) Anmeldenummer: 03750423.0
(22) Anmeldetag: 21.08.2003
(51) Int. Cl.: B62D 5/04

(54) **VORRICHTUNG UND VERFAHREN ZUR VERBESSERUNG DES RÜCKLAUFVERHALTENS FÜR FAHRZEUGE MIT ELEKTROMECHANISCHER LENKUNG**
DEVICE AND METHOD FOR IMPROVING THE RETURNABILITY OF VEHICLES HAVING ELECTROMECHANICAL STEERING
DISPOSITIF ET PROCEDE POUR AMELIORER LE COMPORTEMENT D'AUTO-ALIGNEMENT DANS DES VEHICULES EQUIPES D'UNE DIRECTION ELECTROMECANIQUE

(30) Priorität: 06.09.2002 DE 10244069
(43) Veröffentlichungstag der Anmeldung: 08.06.2005
(73) Patentinhaber: Volkswagen Aktiengesellschaft, 38436 Wolfsburg (DE)
(72) Erfinder: KWASNY, Olaf, 38229 Salzgitter (DE); WAHNSCHAFFE, Klaus, 38444 Wolfsburg / Hattorf (DE); MANZ, Holger, 38173 Sickte (DE)
(74) Vertreter: Effert, Bressel und Kollegen
(86) Internationale Anmeldenummer: PCT/EP2003/009298
(87) Internationale Veröffentlichungsnummer: WO 2004/022412

(56) Entgegenhaltungen:
- EP-A- 0 732 252
- DE-A- 10 053 021
- PATENT ABSTRACTS OF JAPAN vol. 2002, no. 09, 4. September 2002 (2002-09-04) & JP 2002 145101 A (NSK LTD), 22. Mai 2002 (2002-05-22)

## Beschreibung

Die Erfindung bezieht sich auf eine Vorrichtung und ein Verfahren zur Verbesserung des Rücklaufverhaltens für Fahrzeuge mit elektromechanischer Lenkung.

Bei einer elektromechanischen Lenkung wird eine Unterstützungskraft durch einen elektrischen Servomotor zusätzlich zu einem durch einen Fahrer mittels eines Lenkmittels, beispielsweise eines Lenkrades, über eine durchgehende mechanische Verbindung vorgegebenen Lenkwinkels aufgebracht wird. Die Rückstellung mechanischer oder elektromechanischer Lenkgetriebe ist aufgrund von Systemreibung und Achskinematik häufig zu gering, so daß ein unerwünschter Restwinkel verbleiben kann.

Aus der DE 693 03 189 T2 ist eine hydraulische Servolenkung bekannt, umfassend eine Servo-Rückstellvorrichtung mit einem Elektromotor, durch welche auf das Lenkrad ein Rückstellmoment ausgeübt wird, wobei ein Signal für den Elektromotor in einem Rechner beispielsweise in Abhängigkeit der Fahrzeuggeschwindigkeit ermittelbar ist.

Aus der DE 199 08 832 A1 ist eine Lenkvorrichtung für Fahrzeuge bekannt, bei denen keine mechanische Kopplung zwischen lenkbaren Fahrzeugrädern und einem Lenkrad besteht. Dabei wird für eine Rückstellung ein Rückstellmoment durch eine Federanordnung und einen Elektromotor fahrsituationsabhängig aufgebracht.

Die DE 100 53 021 A1 zeigt sowohl eine Vorrichtung als auch ein Verfahren für eine Lenkunterstützung für Fahrzeuge mit elektromechanischer Lenkung, wobei lenkbare Fahrzeugräder sowohl mit einem durch einen Fahrer beeinflussbaren Lenkmittel als auch mit einem elektrischen Servomotor antreibend verbunden sind. Dabei ist mittels zweier Schaltkreise ein fahrsituationsabhängiger Hilfsstrom ermittelbar und der Servomotor ist mit dem Hilfsstrom beaufschlagbar, wobei Eingangsdaten für die Ermittlung des Hilfsstroms mindestens in Abhängigkeit einer Lenkwinkelgeschwindigkeit und einer Fahrzeuggeschwindigkeit durch Kennlinien ermittelbar sind und die Kennlinien durch mindestens abschnittsweise definierte Funktionen beschreibbar sind.

Aus der DE 101 56 369 A1 ist eine Vorrichtung für eine Lenkunterstützung für Fahrzeuge mit elektromechanischer Lenkung bekannt, wobei lenkbare Fahrzeugräder sowohl mit einem durch einen Fahrer beeinflussbaren Lenkmittel als auch mit einem elektrischen Servomotor antreibbar verbunden sind, wobei in mindestens einer Recheneinheit ein fahrsituationsabhängiges Sollrückstellmoment ermittelbar ist und der Servomotor mit dem Sollrückstellmoment beaufschlagbar ist und Eingangsdaten für die Ermittlung des Sollrückstellmoments mindestens in Abhängigkeit eines Lenkwinkels, einer Lenkwinkelgeschwindigkeit und einer Fahrzeuggeschwindigkeit durch Kennlinien ermittelbar sind.

Der Erfindung liegt daher das technische Problem zugrunde, eine Vorrichtung und ein Verfahren zur Verbesserung des Rücklaufverhaltens für Fahrzeuge mit elektromechanischer Lenkung zu schaffen.

Die Lösung des Problems ergibt sich durch die Gegenstände mit den Merkmalen der Ansprüche 1 und 3. Weitere vorteilhafte Ausgestaltungen der Erfindung ergeben sich aus den Unteransprüchen.

In einer Recheneinheit wird ein fahrsituationsabhängiges Sollrückstellmoment ermittelt, und der Servomotor der elektromechanischen Lenkung mit dem Sollrückstellmoment beaufschlagt. Die Eingangsdaten für die Ermittlung des Sollrückstellmoments werden mindestens in Abhängigkeit eines Lenkwinkels, einer Lenkwinkelgeschwindigkeit und/oder einer Fahrzeuggeschwindigkeit durch Kennlinien ermittelt, wobei die Kennlinien entweder durch mindestens abschnittsweise definierte Funktionen und/oder durch Tabellen beschreibbar sind. Durch einen aktiven Rücklauf mit dem fahrsituationsabhängigen Sollrückstellmoment werden Sicherheit und Qualität der elektromechanischen Lenkung erhöht. Bevorzugt wird der vorhandene Servomotor der elektromechanischen Lenkung für den aktiven Rücklauf verwendet. Es ist jedoch auch denkbar, das geforderte Rückstellmoment durch ein weiteres aktives oder passives Stellglied aufzubringen, beispielsweise einen weiteren Servomotor und/oder aktive Federelemente. Durch die Abhängigkeit des Sollrückstellmoments von dem Lenkwinkel wird das Rückstellmoment in Nähe einer Lenkungsmitte gesteuert. Durch die Abhängigkeit von der Lenkwinkelgeschwindigkeit ist eine Rückdrehgeschwindigkeit (z.B. beim Loslassen des Lenkrades bei einer Kurvenausfahrt) beeinflußbar. Die Abhängigkeit von der Fahrzeuggeschwindigkeit bewirkt eine abschwächende oder verstärkende Wirkung des Rückstellmomentes und ermöglicht eine Deaktivierung des Rückstellmoments im Stand, beispielsweise beim Parkieren des Fahrzeugs. Durch Kennlinien sind nichtlineare Zusammenhänge einfach abbildbar. Der aktive Rücklauf kann so einfach an verschiedene Fahrzeug- und/oder Fahrertypen angepaßt werden. Die erste und die zweite Recheneinheit können als ein gemeinsames Element oder als getrennte Elemente ausgebildet werden.

Dabei wird das ermittelte Sollrückstellmoment auf einen Arbeitsbereich beschränkt. Dadurch wird verhindert, daß hohe Rückstellmomente die Stabilität des Fahrzeugs negativ beeinflussen.

Hierzu wird das aufzubringende Sollrückstellmoment in Abhängigkeit eines Lenkmoments ermittelt. Durch die Abhängigkeit wird das Sollrückstellmoment in Kurvenfahrten begrenzt.

In einer bevorzugten Ausführungsform wird ein aus dem Lenkmoment ermittelter Wert vor einer Verarbeitung gefiltert. Der Filter kann entweder als analoger Filter oder als ein digitales Filterverfahren ausgebildet sein. Durch eine Filterung wird die Qualität des Signals verbessert.

Die Erfindung wird nachfolgend anhand eines bevorzugten Ausführungsbeispiels näher erläutert. Die einzige Figur zeigt ein schematisches Blockschaltbild einer Vorrichtung für einen aktiven Rücklauf.

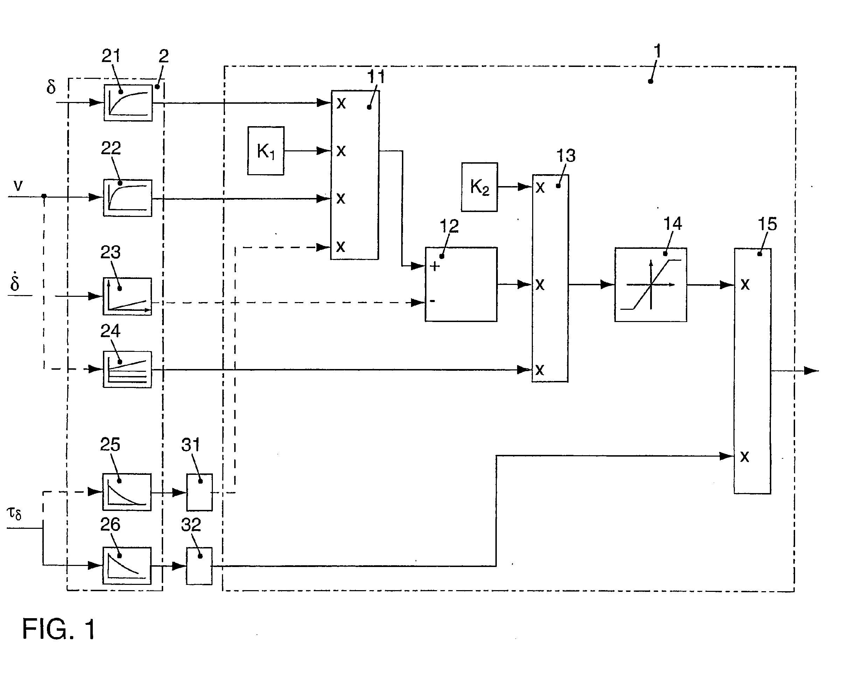

Fig. 1 zeigt einen aktiven Rücklauf durch eine Ermittlung eines Sollrückstellmoments in einer Recheneinheit 1, umfassend die Bausteine 11, 12, 13, 14, 15. Eingangswerte der Recheneinheit 1 sind abhängig von einem Lenkwinkel δ, einer Lenkwinkelgeschwindigkeit δ^{°}, einer Fahrzeuggeschwindigkeit v und einem Lenkmoment τ_{δ} und werden in einer Recheneinheit 2, umfassend die Bausteine 21, 22, 23, 24, 25, 26 mittels Kennlinien ermittelt. Eine lineare, unskalierte Abhängigkeit ist durch eine lineare Kennlinie mit Steigung Eins abbildbar. Die Recheneinheiten 1, 2 sind gemeinsam oder getrennt realisierbar. Daneben ist es auch denkbar, das einzelne Bausteine 11 - 15 oder 21 - 26 gemeinsam ausgebildet sind. Insbesondere die Bausteine 21 - 26 können jedoch auch in Sensoreinheiten zur Erfassung des Lenkwinkels δ, der Lenkwinkelgeschwindigkeit δ^{°}, er Fahrzeuggeschwindigkeit v oder des Lenkmoments τ_{δ} integriert werden. Eine Verarbeitung der erfaßten Signale ist digital oder analog denkbar, eine digitale Verarbeitung ist jedoch zu bevorzugen.

Durch eine geeignete Wahl der Kennlinien ist eine individuelle Anpassung des aktiven Rücklaufs möglich. Stetige Kennlinien können durch Funktionen beschrieben werden. Nichtstetige Kennlinien können abschnittsweise durch Funktionen beschrieben werden oder als Tabellen vorliegen, wobei einzelne Werte durch Interpolation gewonnen werden.

Für die Ermittlung des Sollrückstellmoments wird in einem ersten Schritt eine Sollrückstellgeschwindigkeit aus dem durch den Baustein 21 skalierten Lenkwinkel δ und der durch den Baustein 22 skalierten Fahrzeuggeschwindigkeit v durch Multiplikation in einem Baustein 11 ermittelt und mit einem Faktor K₁ verstärkt. Durch die Multiplikation wird erreicht, daß ohne Fahrzeuggeschwindigkeit (v=0 km/h) kein Rücklauf stattfindet. In einem Baustein 12 wird eine Differenz zwischen der erhaltenen Sollrückstellgeschwindigkeit und einem in Baustein 23 aus der anliegenden Lenkwinkelgeschwindigkeit δ^{°} ermittelten Wert gebildet. Das Ergebnis wird in einem Baustein 13 mit einer Regelverstärkung K₂ skaliert, so daß ein gewünschtes Rückstellmoment erhalten wird. Der erhaltene Wert wird durch einen Baustein 14 auf einen bestimmten Arbeitsbereich beschränkt. Dieses beschränkte Rückstellmoment wird in Baustein 15 mit einem in Baustein 26 aus dem anliegenden Lenkmoment τ_{δ} gewonnen Wert derart skaliert, daß das Sollrückstellmoment in Kurvenfahrten begrenzt bleibt. Durch das Sollrückstellmoment wird das Rücklaufverhalten einer elektromechanischen Lenkung verbessert. Durch eine gestrichelte Linie ist eine Berücksichtigung des Lenkmoments τ_{δ} in Baustein 11 angedeutet. Durch die frühe Berücksichtigung kann verhindert werden, daß ein aktiver Rücklauf bei hohen Lenkmomenten τ_{δ} zugeschaltet wird. Für eine bessere Berücksichtigung der Fahrzeuggeschwindigkeit v, unabhängig von einer Deaktivierung im Stillstand, wird in dem Baustein 24 ein zweiter Wert mittels einer weiteren Kennlinie aus der Fahrzeuggeschwindigkeit vermittelt und dieser Wert dem Baustein 13 zugeführt.

Um Instabilitäten zu vermeinden, werden durch Filterelemente 31, 32 geringe Hystereseeffekte hervorgerufen.

## Patentansprüche

1. Vorrichtung für eine Lenkunterstützung für Fahrzeuge mit elektromechanischer Lenkung,
- wobei lenkbare Fahrzeugräder sowohl mit einem durch einen Fahrer beeinflußbaren Lenkmittel als auch mit einem elektrischen Servomotor antreibend verbunden sind,
- in mindestens einer Recheneinheit ein fahrsituationsabhängiges Sollrückstellmoment ermittelbar ist und der Servomotor mit dem Sollrückstellmoment beaufschlagbar ist,
- Eingangsdaten für die Ermittlung des Sollrückstellmoments mindestens in Abhängigkeit eines Lenkwinkels (δ), einer Lenkwinkelgeschwindigkeit (δ^{°}) und/oder einer Fahrzeuggeschwindigkeit (v) durch Kennlinien ermittelbar sind und die Kennlinien entweder durch mindestens abschnittsweise definierte Funktionen und/oder durch Tabellen beschreibbar sind,
- das ermittelte Sollrückstellmoment durch die Recheneinheit (1) auf einen Arbeitsbereich beschränkbar ist und
- das aufzubringende Sollrückstellmoment in Abhängigkeit eines Lenkmoments (τ_{δ}) ermittelbar ist, wobei das Rückstellmoment mit Hilfe des Lenkmoments τ_{δ} derart skalierbar ist, dass das Sollrückstellmoment in Kurvenfahrten begrenzt bleibt.

2. Vorrichtung nach Anspruch 1, **dadurch gekennzeichnet, daß** ein aus dem Lenkmoment (τ_{δ}) ermittelter Wert vor einer Verarbeitung gefiltert wird.

3. Verfahren für eine Lenkunterstützung für Fahrzeuge mit elektromechanischer Lenkung
- wobei lenkbare Fahrzeugräder sowohl mit einem durch einen Fahrer beeinflußbaren Lenkmittel als auch mit einem elektrischen Servomotor antreibend verbunden sind,
- in mindestens einer Recheneinheit (1) ein fahrsituationsabhängiges Sollrückstellmoment ermittelbar ist und der Servomotor mit dem Sollrückstellmoment beaufschlagbar ist,
- Eingangsdaten für die Ermittlung des Sollrückstellmoments mindestens in Abhängigkeit eines Lenkwinkels (δ), einer Lenkwinkelgeschwindigkeit (δ^{°}) und/oder einer Fahrzeuggeschwindigkeit (v) durch Kennlinien ermittelt werden und die Kennlinien entweder durch mindestens abschnittsweise definierte Funktionen und/oder durch Tabellen beschrieben sind,
- das ermittelte Sollrückstellmoment auf einen Arbeitsbereich beschränkt wird und
- das aufzubringende Sollrückstellmoment in Abhängigkeit eines Lenkmoments ermittelt wird, wobei das Rückstellmoment mit Hilfe des Lenkmoments derart skaliert wird, dass das Sollrückstellmoment in Kurvenfahrten begrenzt bleibt.

4. Verfahren nach Anspruch 3, **dadurch gekennzeichnet, daß** ein aus dem Lenkmoment ermittelter Wert vor einer Verarbeitung gefiltert wird.

## Claims

1. Apparatus for steering assistance for vehicles having an electromechanical steering system,
- steerable vehicle wheels being connected in a driving manner both to a steering means which can be influenced by a driver and to an electric servomotor,
- it being possible for a setpoint restoring moment which is dependent on the driving situation to be determined in at least one computing unit, and it being possible for the servomotor to be loaded with the setpoint restoring moment,
- it being possible for input data for the determination of the setpoint restoring moment to be determined by characteristic curves, at least as a function of a steering angle (δ), a steering angular velocity (δ°) and/or a vehicle speed (v), and it being possible for the characteristic curves to be described by functions which are defined at least in sections and/or by tables,
- it being possible for the determined setpoint restoring moment to be restricted by the computing unit (1) to a working range, and
- it being possible for the setpoint restoring moment which is to be applied to be determined as a function of a steering moment (τ_{δ}), it being possible for the restoring moment to be scaled with the aid of the steering moment τ_{δ} in such a way that the setpoint restoring moment remains restricted when driving around bends.

2. Apparatus according to Claim 1, **characterized in that** a value which is determined from the steering moment (τ_{δ}) is filtered before a processing step.

3. Method for steering assistance for vehicles having an electromechanical steering system,
- steerable vehicle wheels being connected in a driving manner both to a steering means which can be influenced by a driver and to an electric servomotor,
- it being possible for a setpoint restoring moment which is dependent on the driving situation to be determined in at least one computing unit (1), and it being possible for the servomotor to be loaded with the setpoint restoring moment,
- input data for the determination of the setpoint restoring moment being determined by characteristic curves, at least as a function of a steering angle (δ), a steering angular velocity (δ°) and/or a vehicle speed (v), and the characteristic curves being described by functions which are defined at least in sections and/or by tables,
- the determined setpoint restoring moment being restricted to a working range, and
- the setpoint restoring moment which is to be applied being determined as a function of a steering moment, the restoring moment being scaled with the aid of the steering moment in such a way that the setpoint restoring moment remains restricted when driving around bends.

4. Method according to Claim 3, **characterized in that** a value which is determined from the steering moment is filtered before a processing step.

## Revendications

1. Dispositif pour une assistance à la direction pour véhicules automobiles équipés d'une direction électromécanique,
- les roues orientables du véhicule étant reliées de manière motrice à la fois avec un moyen de direction pouvant être influencé par le conducteur et avec un servomoteur électrique,
- un couple de rappel de consigne dépendant de la situation de conduite peut être déterminé dans au moins une unité de calcul et le couple de rappel de cosigne peut être appliqué au servomoteur,
- les données d'entrée pour la détermination du couple de rappel de cosigne peuvent être déterminées par le biais de courbes caractéristiques au moins en fonction d'un angle de direction (δ), d'une vitesse angulaire de direction (δ') et/ou d'une vitesse du véhicule (v) et les courbes caractéristiques peuvent être décrites au moyen de fonctions définies au moins par sections et/ou par le biais de tableaux,
- le couple de rappel de cosigne déterminé peut être limité à une plage de travail par l'unité de calcul (1) et
- le couple de rappel de cosigne à appliquer peut être déterminé en fonction d'un couple de direction (τ_{δ}), le couple de rappel pouvant être adapté à l'aide du couple de direction τ_{δ} de telle sorte que le couple de rappel de cosigne reste limité dans les trajectoires en virage.

2. Dispositif selon la revendication 1, **caractérisé en ce que** la valeur déterminée à partir du couple de direction (τ_{δ}) est filtrée avant un traitement.

3. Procédé pour une assistance à la direction pour véhicules automobiles équipés d'une direction électromécanique,
- les roues orientables du véhicule étant reliées de manière motrice à la fois avec un moyen de direction pouvant être influencé par le conducteur et avec un servomoteur électrique,
- un couple de rappel de consigne dépendant de la situation de conduite peut être déterminé dans au moins une unité de calcul (1) et le couple de rappel de cosigne peut être appliqué au servomoteur,
- les données d'entrée pour la détermination du couple de rappel de cosigne peuvent être déterminées par le biais de courbes caractéristiques au moins en fonction d'un angle de direction (δ), d'une vitesse angulaire de direction (δ') et/ou d'une vitesse du véhicule (v) et les courbes caractéristiques sont décrites au moyen de fonctions définies au moins par sections et/ou par le biais de tableaux,
- le couple de rappel de cosigne déterminé est limité à une plage de travail et
- le couple de rappel de cosigne à appliquer est déterminé en fonction d'un couple de direction, le couple de rappel étant adapté à l'aide du couple de direction de telle sorte que le couple de rappel de cosigne reste limité dans les trajectoires en virage.

4. Procédé selon la revendication 3, **caractérisé en ce qu'**une valeur déterminée à partir du couple de direction est filtrée avant un traitement.
